# EUROPEAN PATENT SPECIFICATION

(11) **EP 4 540 452 B1**
(45) Date of publication and mention of the grant of the patent: **22.07.2026**
(21) Application number: 24708988.1
(22) Date of filing: 27.02.2024
(51) Int. Cl.: D04H 1/067, D01F 2/00, C08B 16/00, D06L 4/30, D06L 4/21, D01F 2/02, D01F 2/06, D01F 13/02, D06L 4/23, D06L 4/614, D06L 4/70

(54) **A METHOD OF TREATING REGENERATED CELLULOSE FIBER FOR TEXTILE AND NON-WOVEN APPLICATIONS**
EIN VERFAHREN ZUR BEHANDLUNG VON ZELLULOSEREGENERATFASERN FÜR TEXTIL- UND VLIESSTOFFANWENDUNGEN
PROCÉDÉ DE TRAITEMENT DE FIBRES DE CELLULOSE RÉGÉNÉRÉES POUR APPLICATIONS TEXTILE ET NON TISSÉES

(30) Priority: 01.03.2023 SG 10202300544T
(43) Date of publication of application: 23.04.2025
(73) Proprietor: Asia Pacific Rayon Limited, Central Hong Kong (CN)
(72) Inventor: HARTANTI, Ade Rahma Dyah, Hong Kong (CN); H'NG, Yin Ying, Hong Kong (CN); STAVIK, Jaroslav, Hong Kong (CN); GINTING, Eduward, Hong Kong (CN)
(74) Representative: Boult Wade Tennant LLP
(86) International application number: PCT/EP2024/054959
(87) International publication number: WO 2024/180065

(56) References cited:
- CA-A- 619 173
- JP-A- 2020 178 823
- JP-B2- 6 727 022
- US-A1- 2014 182 582
- US-B2- 11 105 042

## Description

### Technical Field

The present invention relates to a method of treating regenerated cellulose fibers wherein the treated regenerated cellulose fibers are suitable for use as fiber feedstock. Particularly, the method comprises contacting regenerated cellulose fibers with first and second aqueous solutions. The first aqueous solution comprises a reducing agent and the second aqueous solution comprises an oxidizing agent. The present invention generally pertains to a final treatment of cellulose fibers produced by a regeneration process (i.e. regenerated cellulose fiber) for example by rayon process and non-rayon processes like N-methylmorpholine - N-oxide or Lyocell process; phosphoric acid process; carbamate process and etc. The present invention also relates to a treated fiber feedstock comprising treated cellulose fiber and the use of said treated feedstock for manufacture woven textile fabric and/or in non-woven applications.

### Background

US 3318657 relates to bleaching cellulose fibers, such as jute, linen, cotton, rayon and wood.

WO 2018/073177 relates to a process for recycling of cellulose from textile made up from cellulose.

WO 2018/104330 relates to a fiber manufactured for instance with the Lyocell process or viscose process, said comprising a mixture of a regenerated cellulose fiber and dissolving pulp.

CN 110644234 relates to the technical field of biomedical materials, in particular to an absorbable oxidized regenerated cellulose material and its preparation method and application.

DE 1049043 discloses a process for the post-treatment and finishing of artificial silk threads spun using the viscose process with acid decomposition baths in a continuous operation, characterized in that the thread emerging from the spinning bath and still containing xanthate is, as is known per se, completely decomposed by treatment with dilute mineral acid at a temperature of at least 80°C and the thread is then treated with heat with oxidizing chemicals in a neutral or weakly acidic medium and then with organic acids, for example oxalic acid and/or acetic acid, at a higher temperature, whereupon the thread, as usual, is passed through a weakly alkaline bath and finally finished.

US 1915952 relates to the finishing of rayon, being more particularly concerned with the finishing of crude rayon produced by the so-called viscose-rayon process.

US 2016/0369456 relates to methods and systems for processing cellulose-containing materials such as textiles, including textile garments (used and un-used) and scraps, biomass, wood pulp, and the like and for isolating cellulose molecules for use in a variety of downstream applications.

JP 2020-178823 discloses a surface sheet for an absorbent article constituted of a hydroentangled non-woven fabric. The hydroentangled non-woven fabric is made of 100 mass% of a cellulose fiber, and includes a first fiber layer arranged on a skin side in the use and a second fiber layer arranged in contact with the first fiber layer. The first fiber layer includes 90 mass% or more of a water-repellent cellulose fiber, and the second fiber layer includes 90 mass% or more of a hydrophilic cellulose fiber. The fiber constituting the first fiber layer and the fiber constituting the second fiber layer are partially entangled. In the water-repellent cellulose fiber, a cross-linking agent and a non-fluorine-based water-repellent agent are bonded to a fiber surface. The hydrophilic cellulose fiber has single fiber fineness of 0.5 dtex or more and 3.5 dtex or less

JP 6727022 discloses a regenerated cellulose fiber containing a functional material which contains a functional material in a regenerated cellulose fiber, where the functional material is incompatible with cellulose and includes a substrate and a functional agent mixed in the substrate, where the substrate contains a fatty acid ester in an amount of 25 mass% or more relative to total mass of the substrate.

Viscose (rayon) is a cellulosic fiber whereby raw material - cellulose - is from natural origin, as well as from recycled cellulose-based materials and is manufactured in what is known as the viscose process (rayon process). Cellulose mostly originates from trees where trees are cut into small wood chips and subjected to a chemical pulping among them the pre-hydrolysis Kraft process is the most dominant pulping method although other chemical pulping methods such as sulfite process are also used.

The Kraft process as well as Pre-hydrolysis Kraft process are processes which converts lignocellulosic based material like wood, agriculture materials and waste (e.g. plant material and waste which like wood consist essentially of cellulose, hemicellulose and lignin) and/or recycled cellulose-based material into useful nearly pure cellulose fibers. The Kraft process, particularly the modified Kraft process called Pre-hydrolyzed Kraft Process (PHK), involves treatment of wood chips or any non-wood material containing cellulose in a reactor with hot water under pressure followed by treatment with aqueous solution of sodium hydroxide (NaOH) and sodium sulfide (Na₂S), known as white liquor that dissolve lignin and release the cellulose from the matrix. WO 2020/013755 A1 discloses a process for separation of cellulosic part from raw material matrix, in particular, a process that is integrated into alkaline pulping process, such as the Kraft process. The cooking is typically conducted at a temperature > 150°C. The liquor containing dissolved lignin as well as simple carbohydrates plus inorganic materials, known as a black liquor, is sent to a recovery area so that cooking chemicals are regenerated as well as heat and electricity are produced.

Viscose (Rayon) and the like (such as Lyocell and other which are well known in the art) are often referred to as regenerated cellulose, or sometimes man-made fibers. The process of producing regenerated cellulose generally comprises dissolution of cellulose either directly like Lyocell or via many inter-stage processes like rayon and subsequent coagulation into stable fiber material.

For example, in the viscose process cellulose feedstock is first steeped in an aqueous solution of sodium hydroxide (17-18%), which causes the fibers to swell and converts the cellulose to sodium cellulosate, commonly called alkali cellulose or white crumb. After steeping, the swollen mass is pressed to obtain a precise ratio of alkali to cellulose and then shredded to provide adequate surface area for uniform reaction in subsequent process steps. The alkali cellulose is aged under controlled conditions of time and temperature to depolymerize the cellulose by oxidation to the desired degree of polymerization (DP) prior to reacting with carbon disulfide to form sodium cellulose xanthate. The xanthate, which is a yellow to orange crumb, is dissolved in dilute sodium hydroxide to yield a viscous orange-colored solution called viscose. The solution is filtered, deaerated, and ripened to the desired coagulation point (called salt index) appropriate for wet spinning. The rayon filaments are formed when the viscose solution is extruded through very small holes of a spinnerets into a spin-bath consisting essentially of sulfuric acid, sodium sulfate, zinc sulfate, surfactant, and water. Coagulation of the filaments occurs immediately upon neutralizing and acidifying the cellulose xanthate followed by simultaneous controlled stretching and decomposition of the cellulose xanthate to cellulose. These latter steps are important for obtaining the desired tenacity and other properties of the rayon. Finally, the newly formed rayon is washed and chemically treated (desulfurized), either in the form of continuous filament (yarns or tow) or cut into staple, to remove impurities before applying a processing finish and packaging.

In what is known as the Lyocell process, cellulose feedstock is dissolved directly in a solvent N-methylmorpholine - N-oxide (NMMO) whereby preparation of a homogenous solution (dope) from cellulose in NMMO-water in a reactor followed by extrusion of the highly viscous spinning dope at elevated temperature through an air gap into a coagulation bath (dry-jet wet-spinning process). The coagulated cellulose is washed, dried and treated. NMMO from the coagulation bath is recovered.

Modal/High Wet Modulus Rayon (HWM)/Polynosic fibers are made by using the same chemical process as viscose fibers but under different process conditions to make fibers with different mechanical properties and different fiber cross section profile.

Other man-made fibers known to those skilled in the art include Phosphoric acid process, cold caustic dissolution, cellulose nitrate, Cellulose acetate, Carbamate process, cuprammonium process, loncell, Ionic liquid-based fibers, and deep eutectic solvent-based fibers.

The regenerated cellulose fibers produced by such methods may then be washed to remove salts and other water-soluble impurities and may be bleached. Conventional treatments for instance of viscose fibers and other man-made fibers are based on oxidative treatment. Such oxidative treatment can increase optical fiber properties but reduce mechanical properties to a certain extent.

Sodium hypochlorite is an efficient whiteness improving agent but has carbohydrate degradation impact. The degradation of cellulose can be estimated by determination of viscosity, copper number, alphacellulose content, or fiber tenacity. The total chlorine consumed during the treatment are for substitution (chlorination) and oxidation, which depends on the reaction conditions and type of product. The over-charging of chlorine in the system has little effect on whiteness/brightness improvement, whereas the danger of carbohydrate degradation is increased.

Hypochlorite treatment has a different mechanism depending on the pH, and normally is done in excess of hydroxide. A risk of cellulose degradation is less at higher pH, while below pH 9.0 the degradation will be severe. In addition to the formation of hydrochloric acid from hypochlorous acid, the organic reaction give rise to carbonic acid and carboxyl groups, which will drop the pH further when no excess of hydroxide available. 25-30% excess alkali is needed to maintain the pH after reaction above 8.3. The cellulose subjected to chlorine or hypochlorous acid in neutral or acid solution contains more carbonyl groups. Whereas when the reaction is maintained in alkali condition, the oxidized groups are mainly carboxyls, while the carbonyls decrease.

3 HClO → ClO₃⁻ + 2 Cl⁻ + 3 H⁺

Generally, treatment with hypochlorous acid is considered to be destructive to cellulose strength. In addition to that, the carbonyl and carboxyl contents in the cellulose can contribute to the color change after some period due to its instability.

Accordingly, there remains a need in the art for suitable methods which provide cellulose fibers with both improved mechanical properties and optical properties. Additionally, there is also need for such methods to be carried out in an environmentally friendly and sustainable way. The present invention was developed at least with the aim of addressing these problems and/or with at least the aim to provide a commercially useful alternative.

### Description of the Invention

In a first aspect of the present invention, there is provided a method of treating regenerated cellulose fiber for use as a fiber feedstock in accordance with the claims appended hereto, the method comprising providing a fiber feedstock comprising regenerated cellulose fiber and treating it in the following steps:
(a) contacting the fiber feedstock with a first aqueous solution comprising a reducing agent selected from lithium borohydride and/or sodium borohydride;
(b) contacting the fiber feedstock with a second aqueous solution having a pH of greater than 7 and comprising sodium hypochlorite;
wherein step (a) is performed before step (b).

In accordance with a further aspect not presently claimed, there is provided a treated fiber feedstock comprising treated cellulose-based fiber obtained by the method described herein. In another aspect not presently claimed, there is also provided the subsequent use of such a treated fiber feedstock in the manufacture of a textile fabric or in non-woven applications.

The present disclosure will now be described further. In the following passages, different aspects/embodiments of the disclosure are defined in more details. Each aspect/embodiment so defined may be combined with other aspect/embodiment or aspects/embodiment unless clearly indicated to the contrary. In particular, any feature indicated as being preferred or advantageous may be combined with other feature indicated as being preferred or advantageous.

The present invention relates to a method of treating regenerated cellulose fiber for use as a fiber feedstock. That is, the invention relates to a process which involves treating cellulose fiber so that the treated cellulose fiber is then suitable for use as a fiber feedstock, for example for the manufacture of textile or for non-woven applications. As described herein, the treatment method may serve as the final steps in a process of regenerating cellulose, such as from wood pulp.

In a first step, the method uses a regenerated cellulose fiber feedstock. Preferably the fiber feedstock comprises greater than 50 wt% cellulose fiber by weight of the fiber feedstock, more preferably greater than 75 wt%. In some embodiments, the fiber feedstock may be recycled textiles for example which may have other non-cellulose fiber components but this is not preferred, or may include impurities such as dyes. In general, it is preferred that the fiber feedstock consists essentially of cellulose fiber. Even more preferably, the fiber feedstock comprises (or consists essentially of) regenerated cellulose fiber, such as viscose and/or Lyocell fiber. The present invention is particularly suitable for treating regenerated cellulose essentially directly after regeneration, i.e. as part of the production process, such that the fiber feedstock consists essentially of regenerated cellulose fiber. Preferably, the method uses a viscose or Lyocell process to produce the fiber feedstock as the input or raw material for the treatment process. In other words, there is also described herein a process of producing or regenerating cellulose using the viscose or Lyocell process, further comprising the treatment method described herein conducted on the cellulose fiber after regeneration.

The method comprises a second step of treating the fiber feedstock. Treatment of the fiber feedstock comprises mixing the fiber feedstock with first and second aqueous solutions as described herein wherein the first aqueous solution comprises a reducing agent and the second aqueous solution comprises sodium hypochlorite. These treatments can be carried out in either order such that the fiber feedstock is first mixed with the second aqueous solution and then with the first aqueous solution, or vice versa. Preferably, the fiber feedstock is first mixed with the first aqueous solution comprising a reducing agent and then the second aqueous solution. After the fiber feedstock has been treated with both aqueous solutions, the feedstock may be referred to as a "treated fiber feedstock". Mixing with a first aqueous solution comprising a reducing agent (i.e. step (a)) may be said to produce a "reduced fiber feedstock"**.** The inventors have found that conventional bleaching of cellulose fibers, in particular man-made regenerated cellulose fibers, can reduce the strength of such carbohydrate-based fibers due to degradation of the cellulose chain. The inventors have found that by contacting cellulose fiber with a reducing agent, the agent converts end groups of the cellulose, such as carbonyl and carboxyl groups, to be alcoholic groups. This leads to more stable mechanical and optical properties of the fiber and ultimately reduced fiber yellowing resulting among others from the stabilised cellulose chain.

A reducing agent is a chemical species that is capable of donating electrons to the cellulose fiber. The reducing agent is selected from the group consisting of: lithium borohydride, sodium borohydride, and combinations thereof.

Generally, the first and second aqueous solutions have a pH of greater than 7 (that is an alkaline solution). Acidic solutions may be used with acetic acid and/or oxalic acid but these are less preferred. As such, it is preferred that the first and/or second aqueous solution has a pH of greater than 9 and/or less than 14. More preferably the pH of the first and/or aqueous solution is less than 11, such as from 9 to 11, even more preferably from 9.5 to 10.5. Such ranges are especially preferred in combination with the preferred reducing agents above so as to stabilize the mechanical and optical properties of the treated fiber.

Similarly, the inventors also determined that it is preferred that the first aqueous solution comprises the reducing agent in an amount of at least 0.1 wt% and/or at most 10 wt% by weight of the fiber feedstock, preferably at least 1 wt%, preferably at least 2 wt%, and in some embodiments most preferably at least 3 wt%. Accordingly, preferred ranges include from 0.1 wt% to 10 wt% or from 3 wt% to 10 wt%.

The method further comprises mixing the fiber feedstock with a second aqueous solution having a pH of greater than 7 and comprising sodium hypochlorite (NaOCl). This mixing (i.e. step (b)) may be said to produce an "oxidised fiber feedstock".

Preferably, the second aqueous solution comprises sodium hypochlorite in an amount of at least 0.1 g/L, preferably at least 1 g/L, and/or at most 5 g/L, preferably at most 3 g/L. Accordingly, preferred ranges include from 0.1 g/L to 5 g/L or from 1 g/L to 3 g/L.

More preferably, the second aqueous solution comprises sodium hypochlorite in an amount at least 0.5 wt% and/or at most 5 wt% by weight of the fiber feedstock.

Preferably, step (b) further comprises recovering the fiber feedstock by filtration to separate out the second aqueous solution as a permeate (i.e. filtrate). The fibers retained after filtration may also be washed with, preferably demineralised, water until a permeate having a sufficiently neutral pH is achieved (e.g. about pH 7).

In a preferred embodiment, the first aqueous solution and/or the second aqueous solution comprises sodium hydroxide, and as such the pH of such solutions is greater than 7, preferably greater than 9. It is particularly beneficial for both solutions to have an alkaline pH since this avoids the need to move acid to alkaline pH between steps (a) and (b) of mixing the cellulose fiber with a reducing agent, and the sodium hypochlorite, respectively.

The mixing conditions of steps (a) and (b) are not especially limited. Preferably, the fiber feedstock is mixed with the first aqueous solution, and/or the second aqueous solution, for at least 1 minute, and optionally up to one hour, for example from 5 to 30 minutes. Preferably, the fiber feedstock is mixed with the first aqueous solution, and/or the second aqueous solution, at a temperature of at least 40°C and/or at most 80°C.

It is generally preferred that step (a) further comprises recovering the fiber feedstock by filtration to separate out the first aqueous solution as a permeate. The fibers retained after filtration may also be washed with, preferably demineralised, water until a permeate having a sufficiently neutral pH is achieved (e.g. about pH 7). In preferred embodiments, the permeate is recycled in step (a) and mixed with further fiber feedstock so as to recirculate the first aqueous solution within the process with a plurality of batches of the fiber feedstock. The treated fiber feedstock (obtained after treatment in both steps (a) and (b)) is preferably then dried, for example in an oven up to 100°C, preferably about 50°C.

It is also preferred that the permeate is recycled as a feedstock in the kraft process. The permeate recycled for use in the Kraft process may be the permeate after the first batch in step (a), or any later batch after recirculation. Such an embodiment is particularly suitable in embodiments wherein the fiber feedstock comprises regenerated cellulose fiber, such as that manufactured by the viscose or Lyocell process. The cooking feedstock for the Kraft process is typically wood from which the cellulose is extracted from the other impurities such a lignin. As such, recycling of the spent first aqueous solution recovered as a permeate has been found to significantly improve the overall operating efficiency of the cellulose production process. The permeate may be mixed with the cooking liquor. Preferably, the reducing agent to be used in combination with such recycling is lithium or sodium borohydride, preferably sodium borohydride. The by-product of the cellulose reduction with borohydride is borate (i.e. MBO₂ wherein M is Li or Na). The borate is also able to have a positive impact on the recausticizing efficiency of the Kraft process during the recovery process since it will be carried over in the black liquor circulation. Therefore this use provides for a much more environmentally friendly and sustainable cellulose production process.

The treatment process of the present invention is therefore able to maintain and even improve the physical mechanical properties as well as the optical properties of the cellulose fiber. As such, the method allows for each of the tenacity and the whiteness of the resulting treated fiber feedstock obtained in step (a) and (b) to be the same or greater than that of an equivalent treated fiber feedstock obtained from step (b) only. In another embodiment, each of the tenacity and the whiteness of the fiber feedstock obtained after steps (a) and (b) is the same or greater than that of the input fiber feedstock provided before steps (a) and (b). More preferably, the treated cellulose fiber has a tenacity of at least 2.42 cN/dtex and a whiteness of at least 80%. Whiteness and tenacity can be measured by any conventional means in the art, for example, using Vibrochrom 400 and a Vibrodyn 500 instruments using standard operating procedures in the art.

The resulting product is a treated fiber feedstock comprising (or consisting of) treated cellulose fiber. The fibers exhibit enhanced tenacity and optical properties and may be used as a feedstock in the manufacture of a textile fabric therefrom or in non-woven applications.

Therefore a particularly preferred embodiment of the present invention is a method of treating regenerated cellulose fiber for use as a fiber feedstock, the method comprising providing a fiber feedstock comprising regenerated cellulose fiber and treating it in the following steps:
**(a)** contacting the fiber feedstock with a first aqueous solution comprising a reducing agent at a temperature of at least 40°C, wherein the first aqueous solution comprises the reducing agent in an amount of from 0.1 wt% to 10 wt% by weight of the fiber feedstock;
**(b)** contacting the fiber feedstock with a second aqueous solution having a pH of greater than 7 and comprising sodium hypochlorite, wherein the second aqueous solution comprises sodium hypochlorite in an amount of from 0.5 wt% to 5 wt% by weight of the fiber feedstock;

wherein step **(a)** is performed before step **(b);** and
wherein each of the tenacity and the whiteness of the fiber feedstock obtained after steps **(a)** and **(b)** is the same or greater than that of a fiber feedstock obtained from step **(b)** only.

Even more preferably, the fibre feedstock is treated in the following steps:
**(a)** contacting the fiber feedstock with a first aqueous solution comprising a reducing agent at a temperature of at least 40°C and recovering the fiber feedstock by filtration to separate out the first aqueous solution as a permeate wherein the permeate is recycled as a feedstock in the Kraft process, and wherein the reducing agent is lithium or sodium borohydride and the first aqueous solution comprises the reducing agent in an amount of from 0.1 wt% to 10 wt% by weight of the fiber feedstock;
**(b)** contacting the fiber feedstock with a second aqueous solution having a pH of greater than 7 and comprising sodium hypochlorite, wherein the second aqueous solution comprises sodium hypochlorite in an amount of from 0.5 wt% to 5 wt% by weight of the fiber feedstock;

wherein step **(a)** is performed before step **(b);** and
wherein each of the tenacity and the whiteness of the fiber feedstock obtained after steps **(a)** and **(b)** is the same or greater than that of a fiber feedstock obtained from step **(b)** only.

### Figures

The present invention will now be described further with reference to the following non-limiting Figures, in which:
Figure 1A illustrates and embodiment of the process of the present invention and Figure 1B illustrates a comparative process.
Figure 2 is a plot of tenacity for regenerated cellulose fibers, both raw and after various treatments including at various concentrations of reducing agent.
Figure 3 is a plot of whiteness for the same regenerated cellulose fibers as in Figure 2.
Figure 4 is a plot of tenacity for regenerated cellulose fibers, both raw and after various treatments including at various pHs of the first aqueous solution.
Figure 5 is a plot of whiteness for the same regenerated cellulose fibers as in Figure 4.
Figure 6 is a plot of tenacity for regenerated cellulose fibers, both raw and after various treatments.
Figure 7 is a plot of whiteness for the same regenerated cellulose fibers as in Figure 6.
Figure 8 illustrates the process of recycling the permeate of the first aqueous solution as a feedstock in the Kraft process.

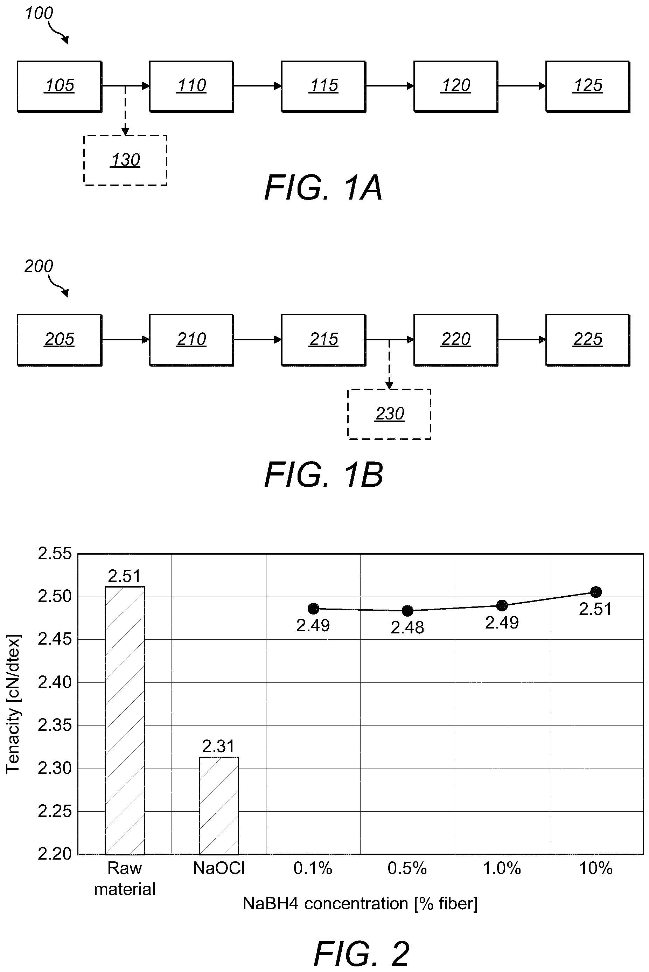

Figure 1A illustrates an exemplary first embodiment 100 of the process of the present invention and Figure 1B illustrates a second comparative embodiment 200 of the process of the present invention.

In the treatment process 100, the first treatment step 105 comprises mixing raw fiber feedstock with an aqueous solution comprising a reducing agent, for example for 3 minutes as 60°C. The fiber feedstock is then filtered and washed in a first washing step 110 with demineralised water to afford a reduced fiber feedstock. This is then mixed in a second treatment step 115 with an aqueous solution of sodium hypochlorite, for example for 3 minutes as 60°C. The fiber feedstock is then filtered in a second washing step 120 with demineralised water to afford a treated fiber feedstock which is finally dried in a drying step 125 in an oven at about 50°C until dry.

In an alternative treatment process 200, equivalent treatments as for the process 100 are used, except that the first treatment step 205 comprises mixing raw fiber feedstock with the aqueous solution comprising sodium hypochlorite. The fiber feedstock is filtered in a first washing step 210 to afford an oxidised fiber feedstock before this is then mixed with the aqueous solution comprising a reducing agent in the second treatment step 215. The fiber feedstock is then filtered and washed in a second washing step 220 with demineralised water to afford a treated fiber feedstock which is finally dried in a drying step 225 in an oven at about 50°C until dry.

In both processes 100 and 200, the filtrate recovered after treatment with the aqueous solution comprising a reducing agent is preferably recycled for use in the Kraft process 130, preferably so as to produce cellulose pulp for use in a process for producing a raw fiber feedstock comprising cellulose fiber (e.g. the viscose or Lyocell process). More preferably, the reducing agent comprises lithium or sodium borohydride since the borate by-product after treatment of the fiber feedstock is able to improve the Kraft cooking yield and therefore the overall efficiency of the whole fiber production process.

### Examples

Unbleached fiber was taken from a viscose production process just before the bleaching stage and used as the raw material (in batches of 10 g). The unbleached fiber was analysed for the moisture content and the treatment solutions were prepared so as to treat 4 to 6 wt% fiber by weight of the treatment solution. Each treatment was done for about 3 minutes.

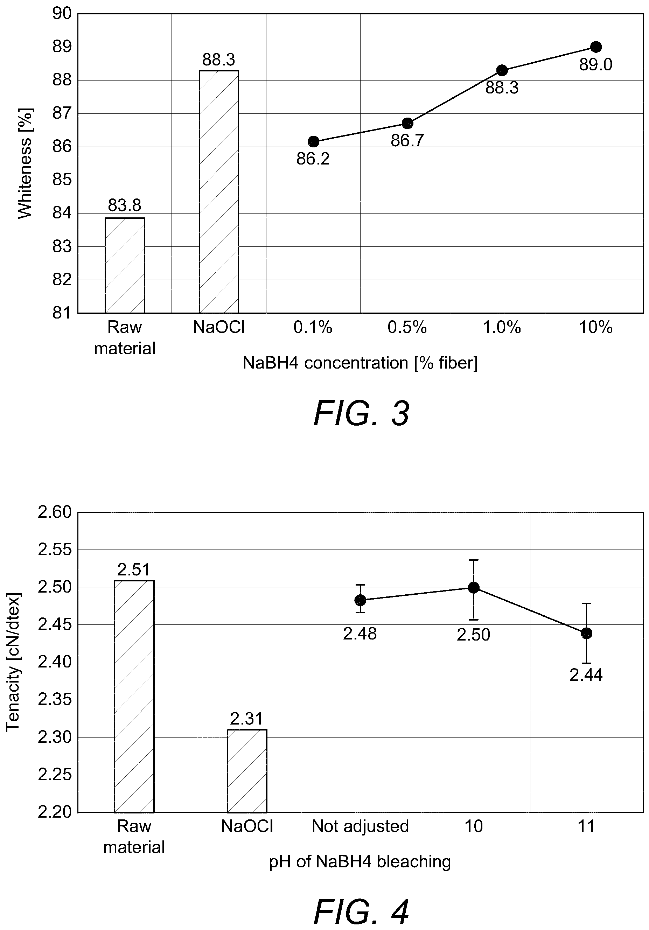

In a first example not according to the invention raw fiber is treated with a sodium borohydride solution in a concentration of 0.1 wt%, 0.5 wt%, 1.0 wt% or 10 wt%. The data shown in Figures 2 and 3 demonstrate that the strength of the regenerated cellulose fiber is preserved even at small concentrations of sodium borohydride. More particularly, a surprising enhancement in whitening can be observed at concentrations at 1 wt% and greater.

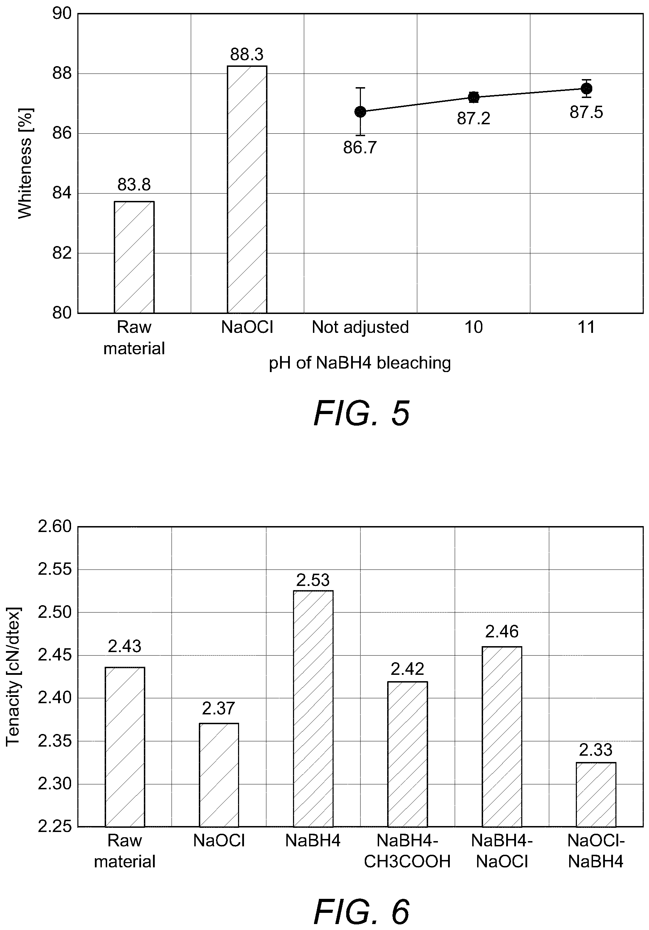

In a second example not according to the invention the raw fiber is treated with a sodium borohydride solution wherein the pH is not adjusted, or is adjusted with sodium hydroxide to a pH of 10 or 11. The data shown in Figures 4 and 5 demonstrate that whiteness is improved on increased pH of the first aqueous solution comprising sodium borohydride. Tenacity of the treated cellulose fiber is greatest at about a pH of 10.

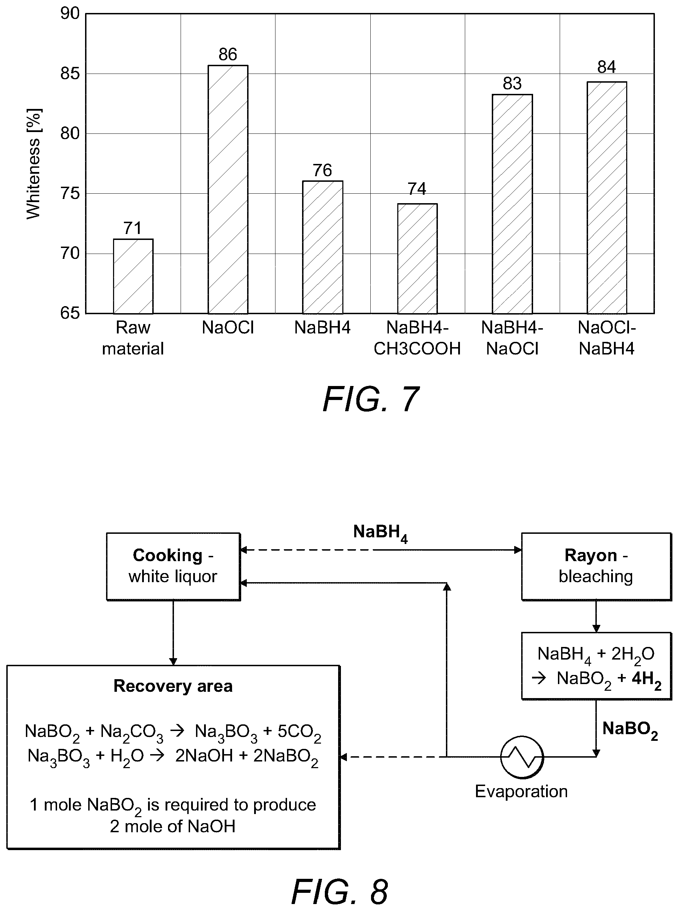

In a third inventive example the raw fiber is treated with a sodium borohydride solution, optionally followed by treated with an acetic acid solution or a sodium hypochlorite solution, or the raw fiber is treated first is a sodium hypochlorite solution followed by a sodium borohydride solution. The data shown in Figures 6 and 7 demonstrate that the combination of a first treatment with sodium borohydride followed by treatment with sodium hypochlorite provides the best combination of both tenacity and whiteness for the treated cellulose fiber. The data demonstrate that the tenacity of a fiber treated in accordance with the method of the present invention can maintain and improve the tenacity with respect to the input regenerated fiber and have a tenacity of greater than 2.42 cN/dtex whilst at the same time having an improve whiteness of greater than 80% which is comparable to the whiteness observed when only sodium hypochlorite is used. As such, the data demonstrates that the reducing agent is effective at protecting the cellulose strength.

### Procedure to analyse the whiteness

The whiteness measurements are performed using a Vibrochrom 400. Before placing in the cuvette, fiber should be homogenized and arranged in the same direction. The measurement is the average of 3 sampling points of 3 grams of fiber.

### Procedure to analyse the tenacity (dry condition)

The tenacity measurements comprise measuring the denier followed by tenacity for every single fiber. The denier or titer measurement is performed using a Vibroskop 500, which suitable for titers from 0.5 to 200 dtex and a minimum length of a single fiber is 24 mm. The range of titer used in the study is 1.2 to 1.5 dtex, most preferably 1.33 dtex with maximum deviation of ≤0.02 dtex. The number of fibers tested for a single measurement is a minimum of 20 single fibers typically using tension weight of 70 mg, though this can be varied depending on the range of fiber titer.

The tenacity measurement is performed using a Vibrodyn 500 and the same tension weight as used for titer measurement. The fiber that has been titer-tested is then inserted into the Vibrodyn and the test results (force and elongation at break) from a minimum 20 single fibers are read.

Testing of denier and tenacity of each fiber is performed under conditioning RH: 65% ± 2% and T: 20°C ± 2°C for minimum 1 hour, to achieve moisture equilibrium.

As used herein, the singular form of "a", "an" and "the" include plural references unless the context clearly dictates otherwise. The use of the term "comprising" is intended to be interpreted as including such features but not excluding other features and is also intended to include the option of the features necessarily being limited to those described. In other words, the term also includes the limitations of "consisting essentially of" (intended to mean that specific further components can be present provided they do not materially affect the essential characteristic of the described feature) and "consisting of" (intended to mean that no other feature may be included such that if the components were expressed as percentages by their proportions, these would add up to 100%, whilst accounting for any unavoidable impurities), unless the context clearly dictates otherwise.

It will be understood that, although the terms "first", "second", etc. may be used herein to describe various elements and/or features of the subject-matter (such as first and second aqueous solutions), the elements and/or features should not be limited by these terms. These terms are only used to distinguish one element or feature from another, or a further, element or feature.

The foregoing detailed description has been provided by way of explanation and illustration, and is not intended to limit the scope of the appended claims. Many variations of the presently preferred embodiments illustrated herein will be apparent to one of ordinary skill in the art.

## Claims

1. A method of treating regenerated cellulose fiber for use as a fiber feedstock, the method comprising providing a fiber feedstock comprising regenerated cellulose fiber and treating it in the following steps:
(a) contacting the fiber feedstock with a first aqueous solution comprising a reducing agent selected from lithium borohydride and/or sodium borohydride;
(b) contacting the fiber feedstock with a second aqueous solution having a pH of greater than 7 and comprising sodium hypochlorite;
wherein step (a) is performed before step (b).

2. The method according to claim 1, wherein the regenerated cellulose fiber comprises viscose, Lyocell, modal, cupra, phosphoric acid cellulose, cellulose nitrates, ethers and esters, cold caustic dissolution, high tenacity rayon, high wet modulus (HWM) rayon, polynosic fiber, carbamate fiber, ionic liquid fiber and deep eutectic solvent (DES) fiber, preferably viscose and/or Lyocell fiber.

3. The method according to claim 1 or claim 2, wherein the first and/or second aqueous solution has a pH of greater than 7, preferably greater than 9 and/or less than 14.

4. The method according to any one of the preceding claims, wherein the first aqueous solution and/or the second aqueous solution comprises sodium hydroxide.

5. The method according to any one of the preceding claims, wherein the fiber feedstock comprises greater than 50 wt% cellulose fiber by weight of the fiber feedstock, preferably greater than 75 wt%.

6. The method according to any one of the preceding claims, wherein the fiber feedstock is mixed with the first aqueous solution, and/or the second aqueous solution, for at least 1 minute.

7. The method according to any one of the preceding claims, wherein the fiber feedstock is mixed with the first aqueous solution, and/or the second aqueous solution, at a temperature of at least 40°C and/or at most 80°C.

8. The method according to any one of the preceding claims, wherein the first aqueous solution comprises the reducing agent in an amount of at least 0.1 wt% and/or at most 10 wt% by weight of the fiber feedstock, preferably at least 1 wt%.

9. The method according to any one of the preceding claims, wherein step (a) further comprises recovering the fiber feedstock by filtration to separate out the first aqueous solution as a permeate,, preferably wherein the permeate is recycled in step (a) and mixed with fiber feedstock.

10. The method according to claim 9, wherein the permeate is recycled as a feedstock in the Kraft process.

11. The method according to any one of the preceding claims, wherein step (b) further comprises recovering the fiber feedstock by filtration to separate out the second aqueous solution as a permeate.

12. The method according to any one of the preceding claims, wherein the second aqueous solution comprises sodium hypochlorite in an amount of at least 0.1 g/L, preferably at least 1 g/L, and/or at most 5 g/L, preferably at most 3 g/L.

13. The method according to any one of the preceding claims, wherein the second aqueous solution comprises sodium hypochlorite in an amount of at least 0.5 wt% and/or at most 5 wt% by weight of the fiber feedstock.

14. The method according to any one of the preceding claims, wherein each of the tenacity and the whiteness of the fiber feedstock obtained after steps (a) and (b) is the same or greater than that of a treated fiber feedstock obtained from step (b) only.

15. The method according to any one of the preceding claims, wherein the treated cellulose fiber has a tenacity of at least 2.42 cN/dtex determined as described in the description and a whiteness of at least 80%, determined as described in the description.

## Patentansprüche

1. Verfahren zur Behandlung regenerierter Cellulosefaser zur Verwendung als Faserrohstoff, wobei das Verfahren Bereitstellen eines Faserrohstoffs, der regenerierte Cellulosefaser umfasst, und Behandeln desselben in den folgenden Schritten umfasst:
(a) in-Kontakt-bringen des Faserrohstoffs mit einer ersten wässrigen Lösung, die ein Reduktionsmittel umfasst, das aus Lithiumborhydrid und/oder Natriumborhydrid ausgewählt ist;
b) in-Kontakt-bringen des Faserrohstoffs mit einer zweiten wässrigen Lösung, die einen pH-Wert von mehr als 7 aufweist, und Natriumhypochlorit umfasst;
wobei Schritt (a) vor Schritt (b) durchgeführt wird.

2. Verfahren nach Anspruch 1, wobei die regenerierte Cellulosefaser Viskose, Lyocell, Modal, Cupra, Phosphorsäurecellulose, Cellulosenitrate, Ether und Ester, kaltlösliche Lösung, hochfeste Reyonfaser, Reyonfaser mit hohem Nassmodul (HWM), Polynosefaser, Carbamatfaser, ionische Flüssigkeitsfaser und DES-Faser (Deep Eutectic Solvent), vorzugsweise Viskose und/oder Lyocell-Faser umfasst.

3. Verfahren nach Anspruch 1 oder Anspruch 2, wobei das erste und/oder zweite wässrige Lösung einen pH-Wert von mehr als 7, vorzugsweise mehr als 9 und/oder weniger als 14 aufweist.

4. Verfahren nach einem der vorstehenden Ansprüche, wobei die erste wässrige Lösung und/oder die zweite wässrige Lösung Natriumhydroxid umfasst.

5. Verfahren nach einem der vorstehenden Ansprüche, wobei der Faserrohstoff mehr als 50 Gew.-% an Cellulosefaser, vorzugsweise mehr als 75 Gew.-% bezogen auf das Gewicht des Faserrohrstoffes umfasst.

6. Verfahren nach einem der vorstehenden Ansprüche, wobei der Faserrohstoff mindestens 1 Minute lang mit der ersten wässrigen Lösung und/oder der zweiten wässrigen Lösung vermischt wird.

7. Verfahren nach einem der vorstehenden Ansprüche, wobei der Faserrohstoff bei einer Temperatur von mindestens 40°C und/oder höchstens 80°C mit der ersten wässrigen Lösung und/oder der zweiten wässrigen Lösung vermischt wird.

8. Verfahren nach einem der vorstehenden Ansprüche, wobei die erste wässrige Lösung das Reduktionsmittel in einer Menge von mindestens 0,1 Gew.-% und/oder höchstens 10 Gew.-% bezogen auf den Faserrohstoff, vorzugsweise mindestens 1 Gew.-% umfasst.

9. Verfahren nach einem der vorstehenden Ansprüche, wobei Schritt (a) weiter Wiedergewinnen des Faserrohstoffs durch Filtration umfasst, um die erste wässrige Lösung als Permeat zu separieren, wobei das Permeat vorzugsweise in Schritt (a) wiederverwendet, und mit Faserrohstoff vermischt wird.

10. Verfahren nach Anspruch 9, wobei das Permeat als Rohstoff im Kraft-Prozess wiederverwendet wird.

11. Verfahren nach einem der vorstehenden Ansprüche, wobei Schritt (b) weiter Zurückgewinnen des Faserrohstoffs durch Filtration umfasst, um die zweite wässrige Lösung als Permeat zu separieren.

12. Verfahren nach einem der vorstehenden Ansprüche, wobei die zweite wässrige Lösung Natriumhypochlorit in einer Menge von mindestens 0,1 g/L, vorzugsweise mindestens 1 g/L, und/oder höchstens 5 g/L, vorzugsweise höchstens 3 g/L umfasst.

13. Verfahren nach einem der vorstehenden Ansprüche, wobei die zweite wässrige Lösung Natriumhypochlorit in einer Menge von mindestens 0,5 Gew.-% und/oder höchstens 5 Gew.-% bezogen auf den Faserrohstoff umfasst.

14. Verfahren nach einem der vorstehenden Ansprüche, wobei die Festigkeit und der Weißgrad des nach den Schritten (a) und (b) erhaltenen Faserrohstoffs jeweils gleich oder größer sind als die eines nur nach Schritt (b) erhaltenen behandelten Faserrohstoffs.

15. Verfahren nach einem der vorstehenden Ansprüche, wobei die behandelte Cellulosefaser eine Festigkeit von mindestens 2,42 cN/dtex, wie in der Beschreibung beschrieben bestimmt, und einen Weißgrad von mindestens 80%, wie in der Beschreibung beschrieben bestimmt aufweist.

## Revendications

1. Procédé de traitement d'une fibre de cellulose régénérée pour utilisation en tant que matière première fibreuse, le procédé comprenant la fourniture d'une matière première fibreuse comprenant la fibre de cellulose régénérée et son traitement selon les étapes suivantes :
(a) la mise en contact de la matière première fibreuse avec une première solution aqueuse comprenant un agent réducteur sélectionné parmi le borohydrure de lithium et/ou le borohydrure de sodium ;
(b) la mise en contact de la matière première fibreuse avec une seconde solution aqueuse présentant un pH supérieur à 7 et comprenant de l'hypochlorite de sodium ;
dans lequel l'étape (a) est effectuée avant l'étape (b).

2. Procédé selon la revendication 1, dans lequel la fibre de cellulose régénérée comprend de la viscose, du lyocell, du modal, du cupra, de la cellulose d'acide phosphorique, des nitrates de cellulose, des éthers et esters, une dissolution caustique à froid, de la rayonne à haute ténacité, de la rayonne à haut coefficient d'hydratation (HWM), une fibre polynosique, une fibre de carbamate, une fibre de liquide ionique et une fibre de solvant eutectique profond (DES), de préférence de la viscose et/ou une fibre de lyocell.

3. Procédé selon la revendication 1 ou la revendication 2, dans lequel la première et/ou la seconde solution aqueuse présente un pH supérieur à 7, de préférence supérieur à 9 et/ou inférieur à 14.

4. Procédé selon l'une quelconque des revendications précédentes, dans lequel la première solution aqueuse et/ou la seconde solution aqueuse comprend de l'hydroxyde de sodium.

5. Procédé selon l'une quelconque des revendications précédentes, dans lequel la matière première fibreuse comprend plus de 50 % en poids de fibres de cellulose par rapport au poids de la matière première fibreuse, de préférence plus de 75 % en poids.

6. Procédé selon l'une quelconque des revendications précédentes, dans lequel la matière première fibreuse est mélangée avec la première solution aqueuse, et/ou la seconde solution aqueuse, pendant au moins 1 minute.

7. Procédé selon l'une quelconque des revendications précédentes, dans lequel la matière première fibreuse est mélangée avec la première solution aqueuse, et/ou la seconde solution aqueuse, à une température d'au moins 40 °C et/ou d'au plus 80 °C.

8. Procédé selon l'une quelconque des revendications précédentes, dans lequel la première solution aqueuse comprend l'agent réducteur en une quantité d'au moins 0,1 % en poids et/ou d'au plus 10 % en poids par rapport au poids de la matière première fibreuse, de préférence d'au moins 1 % en poids.

9. Procédé selon l'une quelconque des revendications précédentes, dans lequel l'étape (a) comprend en outre la récupération de la matière première fibreuse par filtration pour séparer la première solution aqueuse sous forme de perméat, de préférence dans lequel le perméat est recyclé à l'étape (a) et mélangé avec la matière première fibreuse.

10. Procédé selon la revendication 9, dans lequel le perméat est recyclé sous forme de matière première au cours du processus Kraft.

11. Procédé selon l'une quelconque des revendications précédentes, dans lequel l'étape (b) comprend en outre la récupération de la matière première fibreuse par filtration pour séparer la seconde solution aqueuse sous forme de perméat.

12. Procédé selon l'une quelconque des revendications précédentes, dans lequel la seconde solution aqueuse comprend de l'hypochlorite de sodium en une quantité d'au moins 0,1 g/L, de préférence d'au moins 1 g/L, et/ou d'au plus 5 g/L, de préférence d'au plus 3 g/L.

13. Procédé selon l'une quelconque des revendications précédentes, dans lequel la seconde solution aqueuse comprend de l'hypochlorite de sodium en une quantité d'au moins 0,5 % en poids et/ou d'au plus 5 % en poids par rapport au poids de la matière première fibreuse.

14. Procédé selon l'une quelconque des revendications précédentes, dans lequel chacune de la ténacité et de la blancheur de la matière première fibreuse obtenue après les étapes (a) et (b) sont identiques ou supérieures à celles d'une matière première fibreuse traitée obtenue à partir de l'étape (b) uniquement.

15. Procédé selon l'une quelconque des revendications précédentes, dans lequel la fibre de cellulose traitée présente une ténacité d'au moins 2,42 cN/dtex déterminée comme décrit dans la description et une blancheur d'au moins 80 %, déterminée comme décrit dans la description.
